# EUROPEAN PATENT APPLICATION

(11) **EP 0 625 419 A1**
(43) Date of publication of application: **23.11.1994**
(21) Application number: 94107500.4
(22) Date of filing: 13.05.1994
(51) Int. Cl.: B29C 47/16

(54) **Width-wise temperature variation compensation**

(30) Priority: 19.05.1993 US 64754
(71) Applicant: THE CLOEREN COMPANY, Orange, Texas 77631 (US)
(72) Inventor: Cloeren,Peter F, Orange,Texas 77630 (US)
(74) Representative: Patentanwälte Dipl.-Ing. R. Splanemann Dr. B. Reitzner Dipl.-Ing. K. Baronetzky

(57) **Abstract**

An improved apparatus for automated, localized adjustment of the web thickness is provided that includes means for compensating for temperature variation along the apparatus width. In a preferred embodiment, the automated adjustment assembly (32) includes web thickness-controlling, thermal energy sources, and disposed proximate to the thermal energy sources, heat pipe means (70). Beneficially, a generally isothermal environment is provided proximate to the automated adjustment assembly (32).

## Description

### Reference to a Related Application

This application is related to U.S. Patent Application Serial No. 876,492, filed on April 30, 1992, and entitled "WEB THICKNESS CONTROL".

### Background of the Invention

This invention relates to improved control of web thickness.

As exemplified by U.S. Patents 3,761,553 to Richardson, 3,920,365 to Mules, and 4,332,543 to Fulton et al, an extrusion apparatus having a plurality of thermal energy sources spaced part across the apparatus width, and providing for localized changes in web thickness based upon localized viscosity changes, is known. The web thickness is decreased or increased in response to induced localized thermal gradients. The Richardson apparatus also includes manually-operated, lip gap adjustment members.

As illustrated by U.S. Patents 4,281,980 to Hoagland et al, 4,252,519 to Farmer et al, 4,594,063 to Reifenhauser, 4,726,752 to Van Dun, and 5,020,984 to Cloeren, an extrusion apparatus providing for automated, localized lip gap adjustment, is known. The lip gap is adjusted in response to automated means for providing control of web thickness.

In the type of apparatus illustrated by the Farmer et al patent, the lip gap is adjusted by thermal energy sources disposed within a die blade. To prevent temperature variations from affecting the melt temperature as the melt exits the die, the blade lip is maintained at a constant temperature. The '980 apparatus includes a heat barrier means for circulating of a cooling medium.

In the type of apparatus exemplified by the Van Dun and Cloeren patents, common cooling of thermally-controlled, lip gap adjustment members is provided to level out various temperature influences. In the Van Dun patent, a cooling medium is forced perpendicular to the adjustment members through channels provided in a cooling block that surrounds the adjustment members. Collectors for supply and discharge of the cooling medium are in fluid communication with the channels. Two sets of channels having opposite flow, may be used. According to U.S. Patent 4,863,361 to Boos, considerable energy is wasted in flowing a cooling medium around thermally-actuated, lip gap adjustment members.

Therefore, it may be understood that different approaches have been used to provide an improved apparatus for control of web thickness. However, these prior efforts continue to be unsatisfactory. Thus, there continues to be a need for an improved apparatus, and in particular for an improved extrusion apparatus, for controlling web thickness. Advantageously, such an apparatus would produce a web of given thickness uniformity with reduced lip gap adjustment.

### Summary of the Invention

It is accordingly an object of the present invention to provide an improved apparatus for control of web thickness.

It is a further object to provide an apparatus that would produce a web of given thickness uniformity with reduced lip gap adjustment.

Additional objects, advantages and novel features of the present invention are set forth in the description that follows, and in part will become apparent to those skilled in the art upon examination of the following description or may be learned by practice of the invention. The objects and advantages of the invention may be realized and attained by means of instrumentalities and combinations particularly pointed out in the appended claims.

To achieve the foregoing objects and in accordance with the purpose of the present invention, as embodied and broadly described herein, there is provided an apparatus including a lip forming an exit opening or slot which extends along the width of the apparatus, and including a flow passageway that terminates in the exit opening.

Beneficially, the apparatus includes an assembly for automated, localized adjustment of the web thickness. A thermally-controlled assembly of this type includes spaced-apart, thermal energy sources operatively arranged to provide localized adjustment. Advantageously, the thermal energy sources may be associated with temperature-responsive adjustment members or pushrods. Alternatively, automated adjustment may be provided using a field translator.

Beneficially disposed proximate to the automated adjustment assembly, is an element for compensating for temperature variation along the apparatus width. Preferably, this element functions as a heat source and heat sink and is beneficially a heat-exchanging, working fluid that undergoes a phase change in receiving heat and in releasing heat to provide the heat exchange, and that is enclosed within a chamber. This heat transfer element may be advantageously provided by a device known as a heat pipe.

This element reduces thermal gradients proximate to the automated adjustment assembly. When the adjustment assembly includes thermal energy sources, this element beneficially provides for a generally uniform effect of the thermal output emanating from the automated adjustment members, on flow stream viscosity along the apparatus width.

In the drawing and detailed description of the invention that follow, there are shown and essentially described only preferred embodiments of this invention, simply by way of illustration of the best mode contemplated of carrying out this invention. As will be realized, this invention is capable of other and different embodiments, and its several details are capable of modification in various respects, all without departing from the invention. Accordingly, the drawing and the detailed description are to be regarded as illustrative in nature, and not as restrictive.

### Brief Description of the Drawing

Reference is now made to the accompanying drawing, which forms a part of the specification of the present invention.
Figure 1 is a partial cross-sectional view of a preferred embodiment of an extrusion apparatus in accordance with the present invention;
Figure 2 is a partial perspective view of a preferred type of the extrusion apparatus of Figure 1, with an end plate removed and a portion of the apparatus broken away; and
Figure 3 is an enlarged, partial cross-sectional view taken substantially along line 3--3 of Figure 2, showing further details including a schematic representation of the heat pipe operation.

### Detailed Description of the Invention

The present invention is directed to a novel apparatus for manufacturing a web of controlled thickness, and can take the form of a straight slit extrusion die useful in processing a thermoplastic melt stream. The apparatus can be adapted for extrusion into an air space or onto a casting drum.

In a typical apparatus having automated, thermally-controlled, lip gap adjustment, thermal control is regulated, and localized expansion or contraction of the lip gap is provided, in response to measurement of the web thickness. In conceiving the present invention, consideration was given to the gap-controlling, thermal energy sources typically being at different temperatures, that a temperature variation results across the apparatus width that may produce undesirable, localized surface viscosity effects across the width of a molten stream flowing through the apparatus, and that such multiple localized viscosity effects tend to result in a web of uneven thickness for a given exit slot gap. Furthermore, it was conceived that reducing thermal gradients proximate to the thermal energy sources would overcome uneven web thickness with reduced lip gap adjustment, and yet permit, in those cases in which it is useful, a width-wise temperature profile proximate to the molten stream. Moreover, it was realized that the mean temperature of the main body of the apparatus could be permitted to change in response to the thermal energy sources, provided that the temperature variation was reduced.

In an application in which a field translator such as a piezotranslator, is used for automated web thickness adjustment, it was conceived that thermal gradients within the main body of the apparatus may interfere with automated, lip gap adjustment, and that reducing temperature variation proximate to the automated adjustment assembly would reduce interference.

By the invention, temperature variation in the proximity of an assembly for automated, localized adjustment of web thickness, is reduced across the apparatus width. As a result, undesirable, localized viscosity effects resulting from variation in thermal output of web thickness-controlling, thermal energy sources are reduced, and interference of thermal gradients within the apparatus body, with automated operation is likewise reduced. As a consequence, web thickness control is beneficially simplified.

To achieve these benefits, it is not necessary that an isothermal condition be produced across the apparatus width. Assume, for instance, an apparatus having a width-wise temperature profile proximate to a flow stream as follows: 525°F, 520°F, 510°F, 520°F, 525°F. In accordance with the invention, a substantially uniform change in the temperature profile due to heat output of web thickness-controlling, thermal energy sources, may be provided to yield a useful profile, for example, as follows: 527°F, 522°F, 512°F, 522°F, 527°F. Therefore, reduction in temperature variation is beneficially provided proximate to the automated adjustment assembly. Moreover, significant benefit results from reducing the temperature variation to an about +/- 5% variation, that is, in providing a generally or substantially isothermal environment proximate to the adjustment assembly.

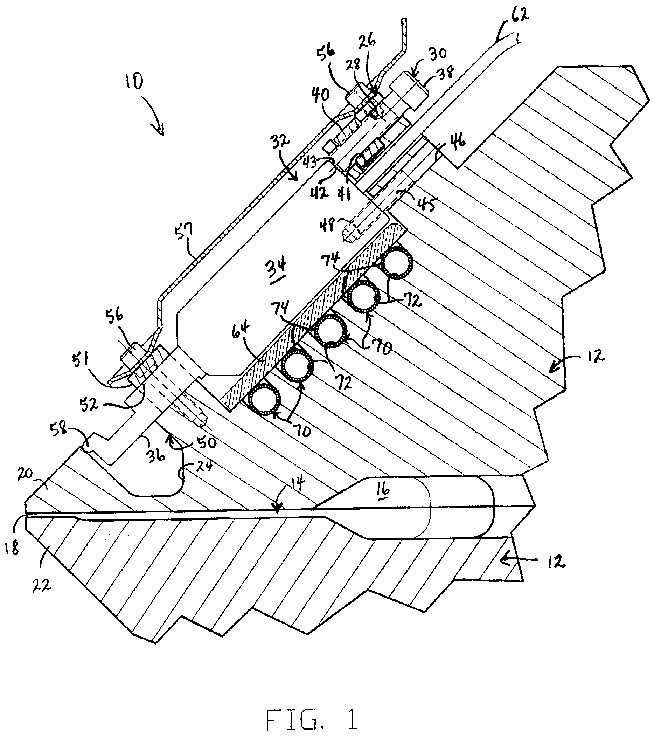

Referring to Figure 1, a preferred embodiment of an extrusion apparatus 10 providing for automated, localized adjustment of web thickness, is generically shown. The apparatus includes a main body 12 having a flow passageway 14, which includes a manifold 16 and which terminates in an exit slot 18 formed by lips 20,22. As may be understood, exit slot 18 extends along substantially the entire apparatus width.

Lip 20 is beneficially flexible to the extent that it can be locally deformed by physical pressure to provide local adjustment of the gap of the exit slot. To this end, lip 20 has a necked down portion defined by a recess 24, which allows for localized flexing of the lip, thereby providing localized thickness control of the web. An insulating member may be disposed in the recess.

With continued reference to Figure 1, main body 12 has an extension 26 along its width which has a bore 28, through which an adjustment bolt 30 of a gap-adjusting assembly 32 extends. The adjustment assembly includes a portion 34, which may be any means for automated movement of a lip-flexing extension 36.

A head 38 of the bolt is engageable by a wrench for manual adjustment of the lip gap. A mid-portion of bolt 30 is in threaded engagement with a threaded member 40 inserted in a recess 41 in extension 26. A bolt end 42 engages an upper end 43 of the adjustment assembly. A guide member 45 is inserted though a smooth throughbore 46 in extension 26, and into a recess 48 in upper end 43 of adjustment assembly portion 34.

Main body 12 also has an extension 50 along its width which combines with member 51 to form a smooth throughbore 52, through which the lip-flexing extension of the adjustment assembly extends. Fasteners 56 connect member 51, and also a cover plate 57, to main body 12. The lip-flexing extension has an operating end 58 in contact with movable lip 20.

Adjustment assembly portion 34, which provides for automated movement, may include for example, a field translator or in the case of thermally-controlled automation, a thermal energy source. A power lead 62 for portion 34 terminates in an electrical box (not shown), which is advantageously in communication with web thickness measurement means. An insulating member 64 may be located between automated adjustment portion 34 and main body 12 of the extrusion apparatus.

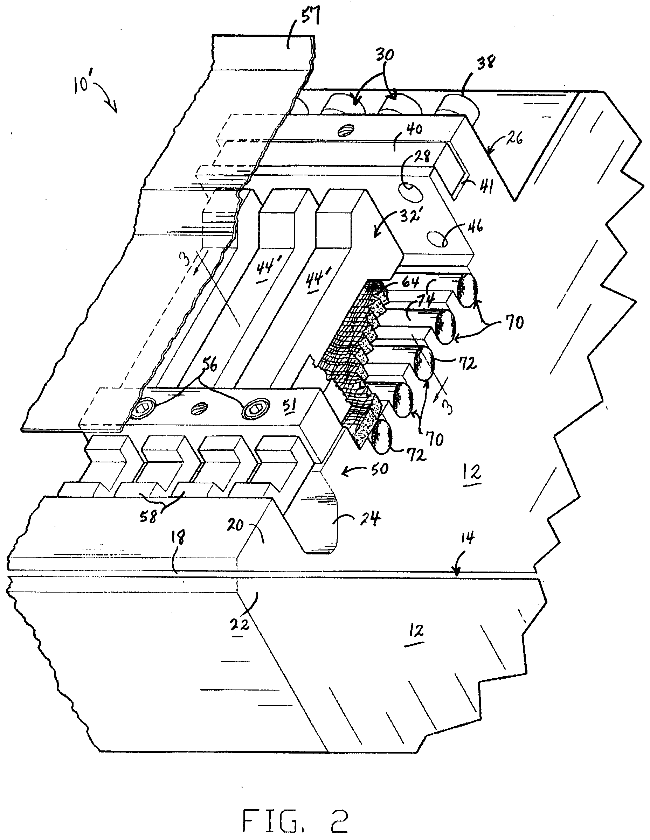

Referring to Figure 2, parts identical to Figure 1 are designed with the same numbers. Figure 2 shows a preferred type of extrusion apparatus, in which a thermally-controlled, gap-adjusting, pushrod/adjustment assembly 32' is used. Exit slot 18 extends along substantially the entire width of apparatus 10'.

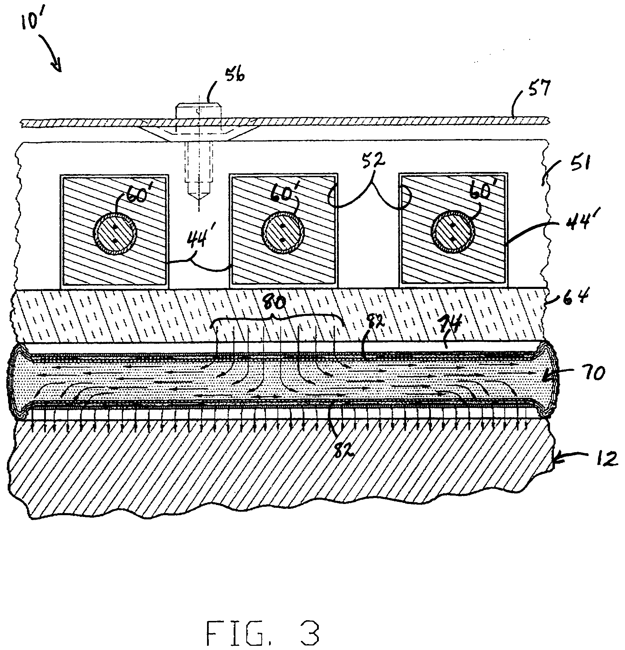

A thermal energy source in the form of a cartridge heating element 60' (shown in Fig. 3), which may be independently controllable, is disposed within a temperature-responsive pushrod 44' of the adjustment assembly. The heating element is generally within a portion of the pushrod disposed between extensions 30,50. An insulating member 64 may be located between the heating element and main body 12 of the extrusion apparatus.

It will be appreciated that Figure 1 shows only one web thickness-controlling assembly, and that many such assemblies are advantageously arranged in a predetermined spaced-apart relationship along the width of an apparatus in accordance with the present invention. Several such assemblies are shown in Figure 2.

Alternatively, gap-controlling, thermal energy sources may be located, for example, within a die blade. Reference is made to the specification of U.S. Patent 4,252,519 to Farmer et al, earlier discussed, for further details of the gap control.

With reference to Figure 2, the automated adjustment assembly is advantageously disposed proximate to elements 70 for compensating for temperature variation. To this end, heat pipes 70 are preferably located typically as close as structurally possible to the pushrod/heating element assembly; however, as may be seen, insulation member 64 may be disposed between to reduce heat transfer between the adjustment assembly and the main body. Generally speaking, the heat pipes will be less than approximately two inches from the adjustment assembly, but in any event will be situated with respect to this assembly and flow passageway 14 to provide for leveling of the heat from the thermal energy sources as the heat moves toward a stream flowing through the passageway, and yet permit, in those cases in which it is useful, a width-wise temperature profile of the apparatus proximate to the flow passageway.

Heat pipes 70 are beneficially disposed at least partially within the main body and generally along the apparatus width, and have a length, separately or when abutted, that may be generally the same as the apparatus width, so as to provide a beneficial thermal gradient-compensating effect for all adjustment assemblies. In this way, each heat pipe efficiently and rapidly functions as a heat source and a heat sink for rapid compensation of localized thermal gradients proximate to beneficially all adjustment assemblies along the apparatus width.

As indicated, several heat pipes are typically used in combination; however, even a single heat pipe would be advantageous. To this end, the main body suitably may include several chambers 72 along its width, and within each chamber, a heat pipe that includes a heat-exchanging, working fluid conveniently enclosed in an individual containment structure or envelope 74. Alternatively, the working fluid may be disposed within a suitable chamber without additional containment.

As indicated, the means for compensating for temperature variation is positioned generally between the automated adjustment assembly and flow passageway 14. In the embodiment illustrated, containment structure 74 does not extend width-wise beyond the main body, and the heat pipes permit excess heat energy to pass to the inner die body and thus allow the mean temperature of the main body to change in response to, for instance, the mean heat output of the thermal energy sources. However, for removal of excess heat, the containment structure ends may, for example, extend beyond the main body and be located in heat exchange communication with conventional means to assist heat removal.

As can be understood, an apparatus according to the present invention beneficially includes a heat-exchanging, working fluid in an enclosed space which may be provided by a containment envelope, disposed proximate to an automated adjustment assembly and generally between the adjustment assembly and a flow passageway. In this way, the inventive apparatus produces a leveling of the thermal environment proximate to the automated adjustment assembly.

Attention is particularly invited to Figure 3, which diagrammatically illustrates the operation of a heat pipe for the apparatus of Figure 2, which includes a thermally-controlled, automated adjustment assembly; and an exemplary description of a heat pipe is now provided. However, those familiar with heat pipes will understand that appropriate conventional changes may be made as desired to the heat pipe described.

Each heat pipe is formed as a closed, evacuated chamber preferably having a containing wall constructed of a highly thermal conductive material. An illustrative thermal conductivity value for a heat pipe may be about 25 watts/cm.°C, whereas by comparison copper has a thermal value of about 4 watts/cm.°C. Heat pipes can be devised with a wide range of thermal conductivity values. The thermal value for a particular heat pipe will depend upon, for instance, the working fluid and wick material employed, and the working volume of the heat pipe.

Within closed, evacuated envelope 74, there is provided a heat exchange medium or working fluid in the form of a volatile liquid. The working fluid is beneficially selected to have a substantial vapor pressure at the minimum operating temperature, thus resulting in a pressurized chamber during operation. Suitable working fluids are within the skill of those familiar with heat pipes.

The working fluid absorbs heat in an area at a temperature above its evaporation temperature, i.e., at a heat input or evaporator area, depicted in Figure 3 as 80. Each of these areas receives heat and an influx of the working fluid, and evaporates the working fluid at a rate proportional to its power input. Each such area operates independently of the others, but feeds a common vapor stream at a nearly common temperature and pressure.

Condensation of the vapor thus formed, occurs upon contact with any surface that is at a temperature below the evaporation temperature of the working fluid, i.e., at a heat output or condenser area. Wick pumping may advantageously be used in the heat pipe. Suitable wick materials are within the skill of those familiar with heat pipes, and include a capillary wick structure provided by wire mesh or screen, depicted in Figure 3 as 82. Wickless heat pipes are also conventional.

In operation, the working fluid transfers heat energy between the condensation areas and evaporator areas, and undergoes a phase change in receiving heat and in releasing heat to provide the heat exchange. The temperatures of the condenser areas increase and the temperatures of the evaporator areas decrease, with a tendency toward a generally isothermal condition proximate to the automated adjustment assemblies.

As can be understood, and with reference to Figure 2, a preferred automated apparatus in accordance with the present invention, includes a plurality of gap-controlling, thermal energy sources spaced apart along the width of the apparatus and proximate to means for temperature variation compensation generally disposed along the apparatus width. In this way, the inventive apparatus compensates for temperature variation emanating from the thermal energy sources, and provides for a generally uniform effect of the thermal output on flow stream viscosity along the apparatus width.

In operation of extrusion apparatus 10', heat output of all gap-controlling, heating elements is set to a selected control value typically in the range of 40 to 60 percent of the full power value. This results in the mean power level input. Heat pipes 70 compensate for the normal temperature variation proximate to the thermal energy sources and along the width of the apparatus. Beneficially, the localized thermal gradients are reduced, and it is generally preferable that the temperature proximate to the thermal energy sources be generally isothermal along the apparatus width, that is, within a +/- 5% variation depending on the nominal operating temperature.

Thereafter, the lip gap is adjusted to the required lip gap profile by rotation of the head 38 of each adjustment bolt 30 in the desired direction, and flow through the lip gap is commenced. Conventional means measure web thickness and provide for increased or decreased heat output of appropriate heating elements 60' in order to produce appropriate localized changes in the lip gap to compensate for thickness variation in the web. The pushrods expand or contract in response to the change in thermal environment. The heat pipes continue to beneficially exert a heat-leveling effect. As a result, a web of uniform thickness may be produced with less lip gap adjustment. An improved, automated lip gap adjustment results.

Having described the invention in detail and by reference to preferred embodiments thereof, it will be apparent that modifications are possible without departing from the scope of the invention defined in the appended claims. Several modifications have been briefly mentioned for purposes of illustration.

## Claims

1. An apparatus comprising a body portion, a lip forming an exit channel terminating in an exit opening having a gap, a flow passageway disposed within said body portion and in communication with said exit channel, and means for automated, localized adjustment of thickness of a web exiting from said gap; and disposed proximate to said automated adjustment means, and generally between said automated adjustment means and said flow passageway, and along the width of said apparatus, heat pipe means for compensating for temperature variation in the proximity of said automated adjustment means.

2. The apparatus of claim 1, wherein said automated adjustment means comprises a plurality of thermal energy sources.

3. The apparatus of claim 1, wherein said automated adjustment means comprises a field translator.

4. The apparatus of claim 2, wherein said thermal energy sources are associated with temperature-responsive pushrods.

5. The apparatus of claim 4, wherein said pushrods are in engagement with mechanically-adjustable, adjustment means.

6. The apparatus of claim 2, wherein insulating means is located between said thermal energy sources and said body portion of said apparatus.

7. The apparatus of claim 3, wherein insulating means is located between said automated adjustment means and said body portion of said apparatus.

8. The apparatus of claim 1, wherein said heat pipe means is disposed within said body portion.

9. An apparatus comprising a body portion, a lip forming an exit channel terminating in an exit opening having a gap, a flow passageway disposed within said body portion and in communication with said exit channel, and a plurality of energy sources for localized thickness adjustment of a web exiting from said gap; and disposed proximate to said energy sources, and generally between said automated adjustment means and said flow passageway, and along the width of said apparatus, heat pipe means for compensating for temperature variation in the proximity of said energy sources.

10. The apparatus of claim 9, wherein said heat pipe means is disposed within said body portion.
